# EUROPÄISCHE PATENTSCHRIFT

(11) **EP 4 002 614 B1**
(45) Veröffentlichungstag und Bekanntmachung des Hinweises auf die Patenterteilung: **03.06.2026**
(21) Anmeldenummer: 21180457.0
(22) Anmeldetag: 18.06.2021
(51) Int. Cl.: H02G 1/12, B25B 7/02

(54) **ABISOLIERZANGE**
INSULATION STRIPPER
PINCE À DÉNUDER

(30) Priorität: 23.11.2020 DE 102020130948
(43) Veröffentlichungstag der Anmeldung: 25.05.2022
(73) Patentinhaber: Krampe Werkzeuge GmbH & Co. KG, 59387 Ascheberg (DE)
(72) Erfinder: KRAMPE, Stephan, 59387 Ascheberg (DE)
(74) Vertreter: Tarvenkorn, Oliver

(56) Entgegenhaltungen:
- EP-A1- 0 791 993
- DE-C1- 4 205 194

## Beschreibung

Die Erfindung betrifft eine automatische Abisolierzange mit den Merkmalen des Anspruchs 1.

Eine automatische Abisolierzange ist ein Handwerkszeug, mit dem an den Enden eines elektrischen Kabels die isolierende Kunststoffummantelung entfernt werden kann. Ein Beispiel ist aus der DE 39 22 016 C2 bekannt. Hierbei wird das Kabel zwischen zwei mit ihren Klingen gegeneinander angestellte Messerelemente gelegt. Das isolierte Kabel wird neben den Messern festgeklemmt. Durch Heranziehen des beweglichen Griffhebels gegen den Handgriff des Grundgehäuses werden die Messerelemente in die Isolierung eingedrückt. Die Messer werden mit der fortschreitenden Greifbewegung in Richtung des Kabelendes verschoben, so dass die von den Messern durchtrennte Isolierung von dem elektrischen Leiter abgestreift wird. All diese Vorgänge können bei der bekannten automatischen Abisolierzange mit einer einzigen Bewegung, nämlich mit dem Heranschwenken des Griffhebels an den Handgriffbereich des Grundgehäuses, erreicht werden. Das Abisolieren von elektrischen Kabeln wird auf diese Weise erheblich erleichtert.

Bei einer weiteren bekannten automatischen Abisolierzange gemäß der GB-A 2 294 162 ist die Funktion wie bei der vorstehend erläuterten Abisolierzange, wobei die Schließbewegung der Messereinheit und die lineare Abzugsbewegung der Messereinheit mit dem eingeschlossenen Kabelende unabhängig voneinander erfolgen. Mit beiden bekannten Abisolierzangen kann jedoch nur eine bestimmte Länge eines Kabelendes abisoliert werden, da die Messer an schwenkbar miteinander verbundenen Schenkeln befestigt sind. Der Abstand zwischen den beiden Messerpositionen beträgt ca. 8 mm bis 12 mm und ist nicht immer ausreichend, um das Litzen- oder Kabelende für moderne Federklemmen ausreichend lang abzuisolieren. Z. B. ist für Leiter mit einem Querschnitt von 1,5 mm² oder 2,5 mm² eine Länge von 15 mm bis 18 mm blankem Leiter erforderlich. Außerdem sind die meist bei solchen Abisolierzangen integrierten Seitenschneider nicht darauf ausgelegt, Kabel und Litzen mit einem Querschnitt von 4 mm² und mehr mit geringem Kraftaufwand durchtrennen zu können.

Eine in EP 0791993 A1 offenbarte Abisolierzange besitzt drei starre Baugruppen, die an drei Gelenken miteinander verbunden sind. Die Öffnungs- und Schließbewegung kann nur erreicht werden, wenn eines der Gelenke in einer Linearführung angeordnet ist. Dadurch kann das Gelenk mit dem Messerschlitten zusammen nach hinten auswandern. Zugleich wird das sich verschiebende Gelenk hochgedrückt, um die Zange zu öffnen, bzw. es wird heruntergezogen, um die Zangenbacken zu schließen. Es sind zwei Messerschlitten vorhanden, die beide zugleich zurückgezogen werden. Die Kinematik ist insofern ungünstig, als die das Schließen der Backen bewirkende Kraftkomponente der Kraft, die über den Hebel und das Gelenk auf das Kabel ausgeübt wird, größer ist als die andere Kraftkomponente, die für die Rückzugsbewegung gebraucht wird. Für Kabel mit einer dicken Ummantelung ist die Abisolierzange daher nicht gut geeignet.

Es stellt sich daher die Aufgabe, eine automatische Abisolierzange so weiterzuentwickeln, dass längere Enden einer Kabelummantelung in einem Arbeitsgang abgetrennt werden können, insbesondere von 12 mm und mehr.

Diese Aufgabe wird durch eine automatische Abisolierzange mit den Merkmalen des Anspruchs 1 gelöst.

Um den limitierenden Faktor bei einem Handwerkzeug zu überwinden, nämlich die durchschnittliche Öffnungsweite einer menschlichen Hand, sieht die Erfindung eine besondere Kinematik vor, über welche das Basiselement, das obere Hebelelement und der bewegliche Griffhebel miteinander verbunden sind. Dadurch, dass die Verbindung dieser genannten Teile jedoch nicht direkt - wie im Stand der Technik üblich - an Schwenklagern erfolgt, sondern über zwei dazwischen eingefügte Zwischenhebelelemente eine Viergelenkkette gebildet ist, wird beim Zusammendrücken der beiden Zangengriffe ein größerer Weg für die Bewegung der gegenüber dem Basiselement beweglichen Teile erreicht, so dass der Messerschlitten einen größeren Weg zurücklegen kann und folglich ein längeres Ende abisoliert werden kann als bei bekannten Abisolierzangen.

In einer Zwischenstellung, in der einzelne Teile aneinander liegen und sich blockieren, ist der Hebelarm vergrößert, so dass ein größeres Drehmoment aufgebracht werden kann, das sowohl an zwischen den zueinander beweglichen Klemmbacken auf das Kabel wirken kann oder auch auf einen optional integrierten Seitenschneider. Dadurch kann die Kraft des Benutzers voll dazu benutzt werden, um das Eindringen der Messer in die Kabelisolierung oder das Durchtrennen eines Kabels am optionalen Seitenschneider zu bewirken. In dieser Stellung ist in der Viergelenkkette vorgesehen, dass das hintere Zwischenhebelelement in etwa senkrecht zu der Verbindungslinie der beiden Griffhebelgelenke ist. Erst nach Durchtrennen des Kabelmantels führt die weiterhin vom Benutzer ausgeübte Kraft dazu, dass das hintere Zwischenhebelelement umschwenkt, so dass dann die Kraft über das vordere Zwischenhebelelement auf den zurückziehbaren Messerschlitten wirkt. Die Kinematik der erfindungsgemäßen Abisolierzange führt also zu einer Schwenkbewegung der beweglichen Teile zueinander und dann zu einer linearen Rückzugsbewegung. Dies ermöglicht, dünne wie dicke Kabel gleichermaßen zu bearbeiten, ohne dass dafür eine irgendeine Verstellung an der Abisolierzange notwendig ist.

Zur Ausbildung eines Seitenschneiders sieht eine Ausführungsform der Erfindung vor, das vordere Zwischenhebelelement über das obere Hebelgelenk hinaus nach oben als Seitenschneidermesserelement zu verlängern. Das überstehende Stück des Zwischenhebels bildet ein Seitenschneiderambosselement, das gegen eine Schneide wirkt, die fest am oberen Hebelelement ausgebildet ist.

Die Schneide kann Teil eines separaten Elements sein, das an der Hebeleinheit verschraubt wird und somit austauschbar ist. Die Anordnung von Schneide und Amboss kann auch umgekehrt gewählt sein.

Bei der bevorzugten Ausführungsform der Abisolierzange, die einen Seitenschneider vorsieht, wird die Endposition der beweglichen Teile wie insbesondere des Messerschlittenelements erreicht, wenn das Seitenschneiderambosselement und die Schneide aneinander liegen.

Im Übrigen ist ein Festanschlag im Gehäuse vorgesehen, der den Weg des Messerschlittens begrenzt.

Der Messerschlitten besitzt vorzugsweise eine lineare Führungskulisse, in der ein in der Hebeleinheit befestigter Führungsstift geführt ist. Über den in der Führungskulisse laufenden Führungsstift kann der Verschiebeweg ebenfalls begrenzt werden.

Die Endposition des Messerschlittens kann alternativ auch dadurch festgelegt werden, dass die Rollen am Messerschlittengelenk den Endpunkt ihrer Bahn im oberen Hebelelement erreichen.

Die Funktion einer Abisolierzange nach der Erfindung wird nachfolgend anhand des in den Zeichnungen dargestellten Ausführungsbeispiels näher erläutert. Die Figuren zeigen im Einzelnen:
- Fig. 1: eine perspektivische Darstellung einer Abisolierzange in einer geschlossenen Stellung;
- Fig. 2: die Abisolierzange in seitlicher, teilweise geschnittener Darstellung;
- Fig. 3: die Abisolierzange in teilweise geschnittener, perspektivischer Darstellung von rechts;
- Fig. 4: die Abisolierzange in teilweise geschnittener, perspektivischer Darstellung von links;
- Fig. 5A: die geöffnete Abisolierzange in seitlicher, teilweise geschnittener Darstellung;
- Fig. 5B: die vereinfachte Ansicht nach Fig. 5A;
- Fig. 6: die geschlossene Abisolierzange in seitlicher, teilweise geschnittener Darstellung;
- Fig. 7: die geschlossene Abisolierzange mit zurückgezogenem Messerschlitten in seitlicher, teilweise geschnittener Darstellung; und
- Fig. 8: einen vorderen Bereich der geschlossenen Abisolierzange in perspektivischer, teilweise geschnittener Darstellung.

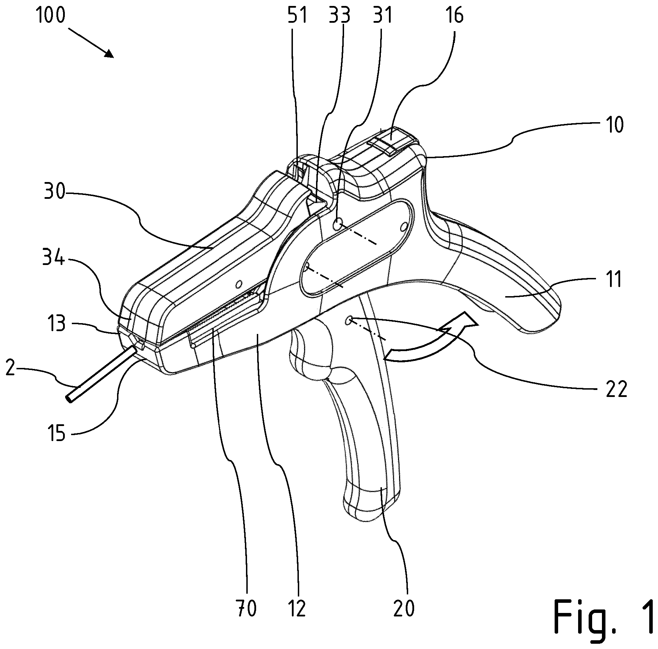

In Figur 1 ist eine Abisolierzange 100 in einer geschlossenen Stellung perspektivisch gezeigt. In dieser Stellung liegt eine obere Hebeleinheit 30 mit einer Klemmbacke 34 auf einer unteren Klemmbacke 15, die Teil eines Gegenhalterbereichs 12 eines Basiselements 10 ist, auf. Die Hebeleinheit 30 und das Basiselement 10 sind an einem oberen Hebelgelenk 31 gelenkig miteinander verbunden, das heißt, durch eine Bewegung um diesen Punkt kann die Hebeleinheit 30 mit ihrer Klemmbacke 34 von der unteren Klemmbacke 15 abgehoben werden. Die Bewegung zwischen der Hebeleinheit 30 und dem Basiselement 10 kann über ein Sperrelement 16 blockiert werden. Weiterhin ist ein Griffhebel 20 schwenkbeweglich sowohl mit der Hebeleinheit 30 wie auch mit dem Basiselement 10 verbunden. In Figur 1 ist zudem die Lage eines hinteren Griffhebelgelenks 22 sichtbar.

Die Bedienung der Abisolierzange 100 erfolgt, indem der Griffhebel 20 gegen einen Griffbereich 11 des Basiselements 10 gezogen wird. Ein in einer Einführöffnung 13 eingeführtes und zwischen den Klemmbacken 15, 34 eingeklemmtes Kabel 2 wird abisoliert, indem ein V-förmiges Messerelement von oben auf den Kabelmantel gedrückt wird. Im Gegenhalterbereich12 ist ein bewegliches Auflageelement 70 gelagert. Im Gegenhalterbereich 12 ist ebenfalls ein Messerelement vorgesehen, das von unten auf den Kabelmantel drückt. Indem der Messerschlitten 40, der verschiebbar innerhalb der oberen Hebeleinheit 30 gelagert ist, zurückgezogen wird, fahren die beiden Messerelemente auseinander, und die durchtrennte Isolierung des Kabelendes wird nach hinten abgezogen.

An der Oberseite ist ein Seitenschneider ausgebildet. Dafür besitzt die Hebeleinheit 30 ein fest mit ihr verbundenes Seitenschneidermesserelement 33. Bei der zuvor beschriebenen Schließbewegung der Abisolierzange 100 wird zugleich ein Seitenschneiderambosselement 51 an das Seitenschneidermesserelement 33 gedrückt, so dass ein dazwischen eingeführtes Kabel 2 durchgeschnitten wird.

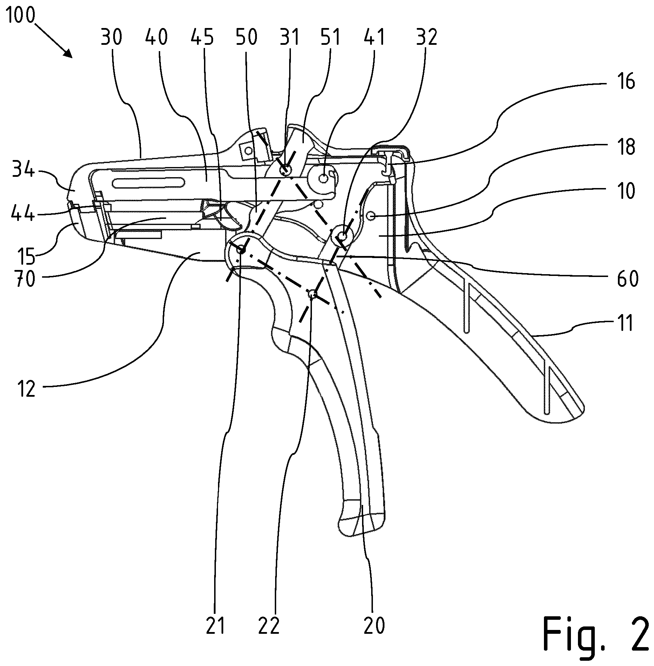

In Figur 2 ist die Abisolierzange 100 mit hälftig geteiltem Basiselement 10 dargestellt, um den Blick auf die innen liegenden Teile freizugeben. Wesentlich ist dabei die Getriebekonfiguration, die aus den folgenden Gelenkpunkten und Bauteilen gebildet wird:
- Die obere Hebeleinheit 30, das Basiselement 10 und das Zwischenhebelelement 50 sind über das obere Hebelgelenk 31 miteinander gekoppelt. Sieht man das Basiselement 10 als ortsfestes Bauteil der Abisolierzange 100 an, nämlich dasjenige, das in der Hand des Benutzers ruht, so bildet das Hebelgelenk 31 den einzigen Gelenkpunkt, der seine Lage bei der Benutzung der Abisolierzange 100 nicht verändert. Die Hebeleinheit 30 schwenkt nur um diesen Punkt, was dazu führt, dass die Abisolierzange 100 geöffnet und geschlossen wird.
- An dem vorderen Griffhebelgelenk 21 sind das vordere Zwischenhebelelement 50 und der Griffhebel 20 gelenkig miteinander verbunden. Das vordere Zwischenhebelelement 50 erstreckt sich somit zwischen dem oberen Hebelgelenk 31 und dem vorderen Griffhebelgelenk 21. Das Seitenschneiderambosselement 51 bildet eine Verlängerung des Zwischenhebelelements nach oben.
- Der Griffhebel 20 ist außerdem an einem hinteren Griffhebelgelenk 22 mit einem zweiten, hinteren Zwischenhebelelement 60 gelenkig verbunden.
- Das hintere Zwischenhebelelement 60 ist außerdem an einem unteren Hebelgelenk 32 mit der oberen Hebeleinheit 30 verbunden.

Die strichpunktierten Linien verdeutlichen die Konfiguration aus den vier Gelenkpunkten 21, 22, 31, 32 und den Hebelstrecken dazwischen. Der Griffhebel 20 schwenkt also bei der Benutzung der Abisolierzange nicht um einen einzelnen Gelenkpunkt, sondern wird über die beiden Zwischenhebelelemente 50, 60 bewegt und wirkt über diese auf die beweglichen Teile im oberen Bereich der Abisolierzange 100.

In Figur 2 ist die Zange in einer Schließstellung dargestellt, das heißt, die Klemmbacken 15, 34 liegen aneinander, und der Messerschlitten 40 befindet sich relativ zu der Hebeleinheit 30 in einer vorderen Position. Zieht man in dieser Stellung jeweils eine Verbindungslinie zwischen den beiden Griffhebelgelenken 21, 22 und zwischen dem vorderen Griffhebelgelenk 21 und dem oberen Hebelgelenk 31, so ist der dazwischen eingeschlossene Winkel in etwa rechtwinklig, das heißt, er beträgt zwischen 80° und 100°. Dies gilt auch für eine Verbindungslinie zwischen den beiden Griffhebelgelenken 21, 22 und zwischen dem hinteren Griffhebelgelenk 22 und dem hinteren Hebelgelenk 32. Die beiden Zwischenhebelelemente 50, 60 sind zugleich in etwa parallel zueinander ausgerichtet. Die über den Griffhebel 20 ausgeübte Kraft wird daher in dieser Stellung nahezu vollständig mit dem vorderen Zwischenhebelelement 50 als mechanisch wirksamem Hebelarm in ein am oberen Hebelgelenk 3131 wirkendes Drehmoment umgewandelt, durch welches die Klemmbacken 15, 34 stark aufeinandergedrückt werden, um das Kabel 2 sicher zu halten und zugleich das Messerelement in den Kabelmantel zu drücken, um ihn aufzutrennen.

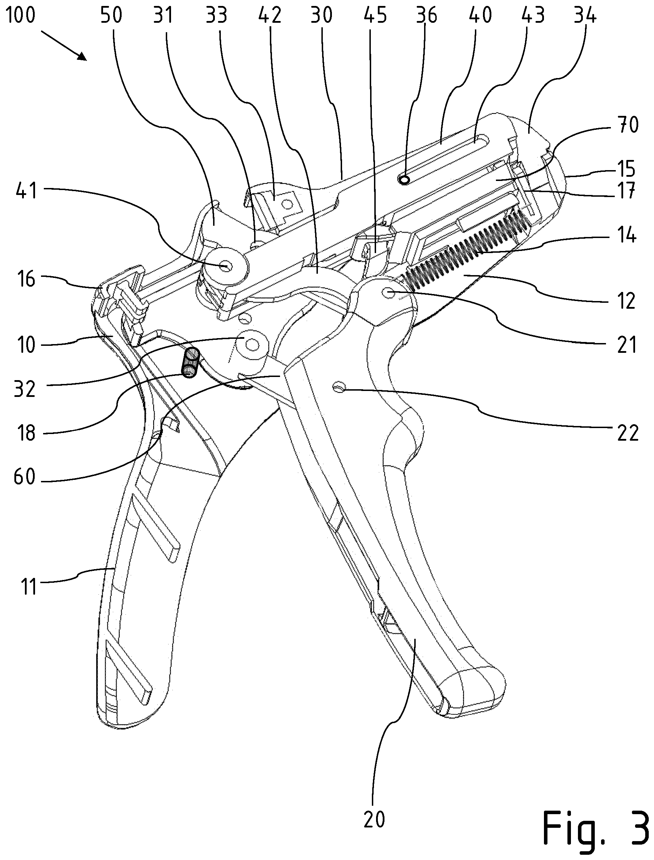

Der Messerschlitten 40 ist über ein Messerschlittengelenk 41 mit einem Messerschlittenvorschubelement 42 gekoppelt, das in Figur 2 größtenteils von dem Zwischenhebelelement 50 überdeckt ist und in Figur 3 besser sichtbar ist. Dabei handelt es sich um ein kurzes Hebelelement, das mit einem Ende an das Messerschlittengelenk 41 mit seinem anderen Ende an dem vorderen Griffhebelgelenk 21 am Griffhebel 20 angebunden ist. Es ist in der in Fig. 2 abgebildeten Stellung in einem spitzen Winkel zur Verschieberichtung des Messerschlittens 40 angestellt, so dass der Messerschlitten 40 darüber zurückgeschoben wird, sobald das vordere Griffhebelgelenk 21 beim Betätigen der Abisolierzange 100 durch Zusammendrücken der Griffhebel 11, 20 nach hinten wandert. Ein Stift 18 im Gehäuse 10 begrenzt den Rücklauf des Messerschlittens 40.

Am Messerschlittengelenk 41 sind außerdem Rollen angebracht, über welche das Messerschlittengelenk 41 an der oberen Hebeleinheit 30 abgestützt ist. Dadurch ist die Bahn des Messerschlittengelenks 41 vorgegeben.

Figur 3 ist eine perspektivische Ansicht der Abisolierzange 100 von der rechten Seite gesehen, wobei das Basiselement 10 und die Hebeleinheit 30 hälftig geschnitten sind. Dabei sind auch die Rollen am Messerschlittengelenk 41 erkennbar.

Der Messerschlitten 40 besitzt eine nach unten ragende Klaue 45, die in das Auflageelement 70 eingreift, so dass letzteres mit dem Messerschlitten 40 zusammen zurückgezogen wird. Außerdem besitzt der Messerschlitten 40 eine lineare Führungskulisse 43, in der ein in der Hebeleinheit 30 befestigter Führungsstift 36 geführt ist. Über den in der Führungskulisse laufenden Führungsstift 36 ist ein Verschiebeweg des Messerschlittens 40 relativ zur Hebeleinheit 30 vorgegeben.

Eine Zugfeder 14 ist unterhalb des Auflageelements 70 in dem Gegenhalterbereich 12 angeordnet. Sie ist zwischen dem Gegenhalterbereich 12 des Basiselements 10 und dem vorderen Griffhebelgelenk 21 aufgehängt und sorgt dafür, dass der Griffhebel 20 in seine Ausgangsstellung gegenüber dem Basiselement 10 zurückgeführt wird, wenn der Benutzer ihn loslässt. Dabei wird der Messerschlitten 40 mit nach vorn gezogen.

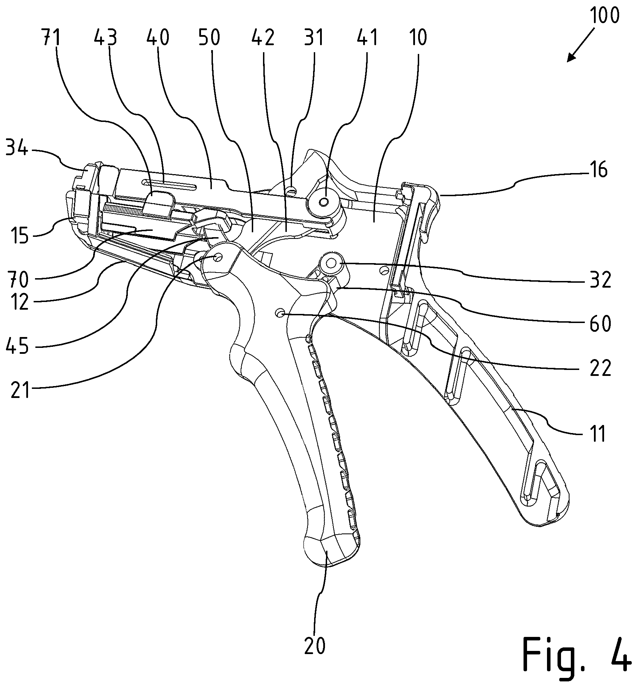

Fig. 4 ist eine perspektivische Ansicht der Abisolierzange 100 von der linken Seite gesehen, wobei das Basiselement 10 hälftig geschnitten ist und die Hebeleinheit 30 vollständig entfernt ist, um insbesondere einige Bauteile im vorderen Bereich zwischen der oberen Hebeleinheit 30 und dem Gegenhalterbereich 12 besser darstellen zu können. Dies bezieht sich insbesondere auf den Eingriff der Klaue 45 des Messerschlittens 40 in das Auflageelement 70.

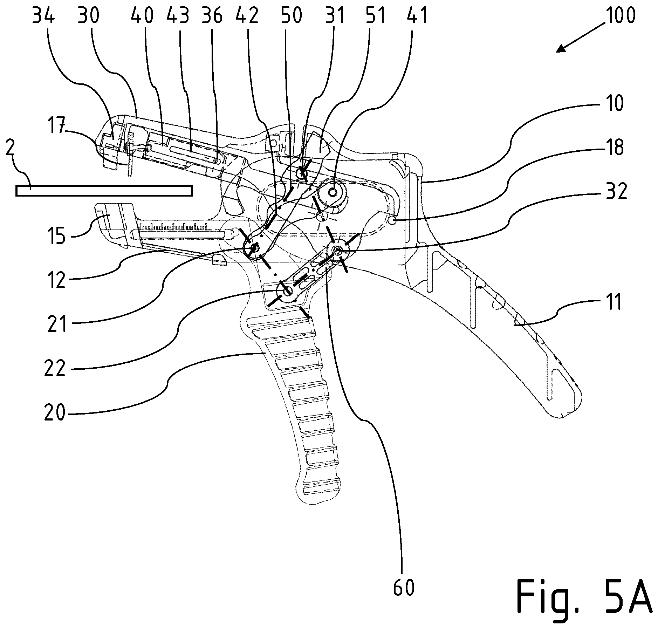

Die Bewegungsabfolge der Bauteile der Abisolierzange 100 während eines Abisoliervorgangs wird anhand der Figuren 5A bis 7 erläutert.

Figur 5A zeigt die entsperrte Abisolierzange 100. Eine hier nicht dargestellte Zugfeder 14 (siehe Figur 3), die mit einem Ende an einem Federlager vorn an dem unterem Gegenhalterbereich 12 befestigt ist, ist mit ihrem anderen Ende an dem vorderen Griffhebelgelenk 21 befestigt. Durch die Zugkraft der Feder wird die in Fig. 5A gezeigte Öffnungsstellung herbeigeführt, in welcher:
- der Griffhebel 20 vom Griffbereich 11 des Basiselements 10 abgespreizt ist;
- der Messerschlitten 40 mittels des Messerschlittenvorschubelements 42 nach vorn gezogen ist und in einer vorderen Stellung innerhalb der Hebeleinheit 30 positioniert ist;
- die obere Hebeleinheit 30 mit dem Messerschlitten 40 nach oben geschwenkt ist, so dass zwischen den Klemmbacken 15, 34 ein Kabel 2 eingelegt werden kann.

Der Seitenschneider an der Oberseite ist ebenfalls geöffnet, da das Seitenschneiderambosselement 51, das oberhalb des Hebelgelenks 30 liegt, nach hinten geschwenkt ist.

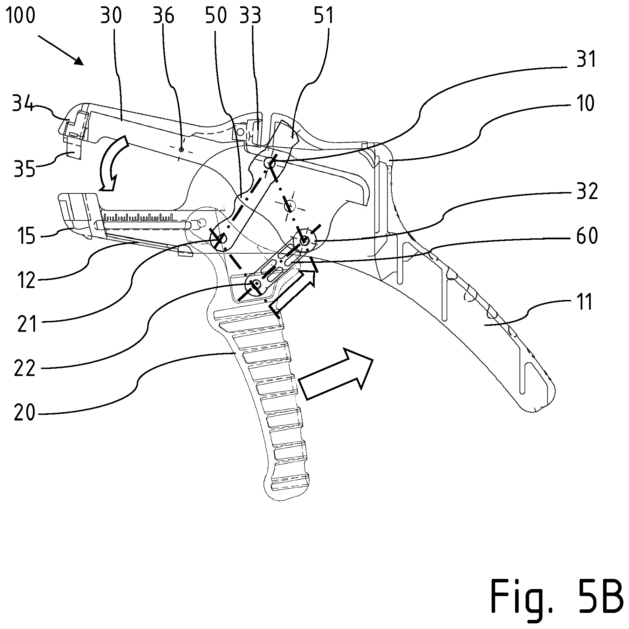

Zu besseren Darstellung der durch die vier Gelenke 31, 32, 21, 22 und die dazwischen befindlichen Hebelstrecken gebildeten Kinematik ist die Abisolierzange 100 in Fig. 5B nochmals in derselben Stellung wie in Fig. 5A gezeigt, jedoch ohne das Messerschlittenelement und das Messerschlittenvorschubelement.

Zwischen den Gelenken 21, 22, 31, 32 bildet sich in dieser Zangenstellung durch die Hebellinien, die mit den strichpunktierten Linien markiert sind, eine viereckige Konfiguration. Das vordere Zwischenhebelelement 50, das die Gelenke 31 und 21 miteinander verbindet, und das hintere Zwischenhebelelement 60 zwischen den Gelenken 22 und 32 liegen jeweils auf gegenüberliegenden Seiten des Vierecks. Dabei ist das hintere Zwischenhebelelement 60 in etwa senkrecht zur Verbindungslinie der Griffhebelgelenke 21, 22 ausgerichtet.

Wird nun der untere Griffhebel 20 gegen den Griffbereich 11 des Basiselements 10 bewegt, verschwenkt die Hebeleinheit 30 um das obere Hebelgelenk 31 relativ zum Basiselement 10. Das hintere Zwischenhebelelement 60 drückt außerdem über die Verbindung am unteren Hebelgelenk 32 auf die Hebeleinheit 30 und leitet damit die Schließbewegung ein.

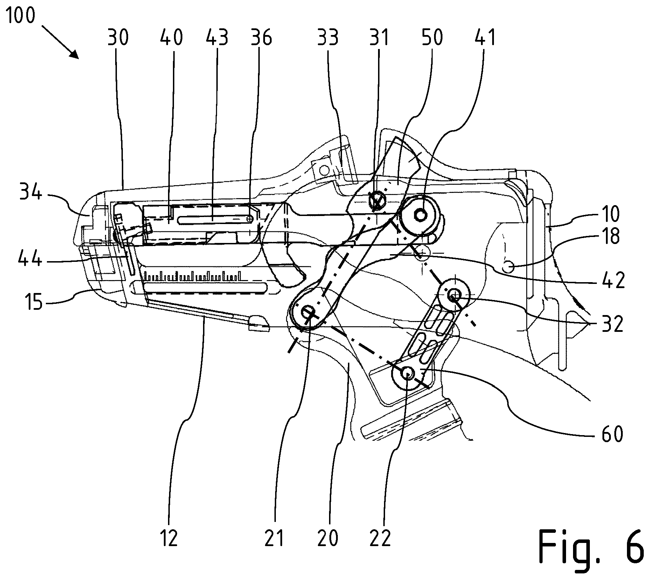

Figur 6 zeigt den vorderen Bereich der Abisolierzange 100, wenn die Schließstellung erreicht ist, die bereits in Figur 2 dargestellt worden war. Dabei liegt die Hebeleinheit 30 mit ihrer Klemmbacke 34 mit ihrem Messerelement 44 entweder an einem eingeführten Kabel oder direkt an dem unten liegenden Gegenhalterbereich 12 mit der Klemmbacke 15 an. Die Hebeleinheit 30 ist daher für eine weitere Schwenkbewegung relativ zum Basiselement 10 blockiert.

Da bei der nach der Erfindung vorgesehenen Viergelenk-Schubgetriebekonstruktion die Länge der Zwischenhebelelemente 50, 60 unterschiedlich und dementsprechend der Abstand der Gelenke 21, 31 größer ist als der Abstand der Gelenke 22, 32, verschwenkt der Zwischenhebel 60 zunehmend nach innen, wenn der Griffhebel 20 noch weiter zurückgezogen wird. Der Winkel des Zwischenhebels 60 zur gedachten Verbindungslinie der Gelenke 31, 32 ändert sich zunehmend zu einem in der Endposition gestreckten Winkel, so dass der Zwischenhebel 60 beim Schwenken zunehmend weniger Kraft auf die Hebeleinheit 30 ausüben kann. Die Schwenkbewegung der Hebeleinheit 30 um das Hebelgelenk 31 ist mit dem vollständigen Schließen der Klemmbacken 15, 34 ohnehin bereits beendet.

Damit geht die auf den Griffhebel 20 aufgebrachte Kraft zum einen über das Griffhebelgelenk 21 auf das damit gekoppelte vordere Zwischenhebelelement 50. Beim weiteren Zusammendrücken der Zangengriffe wird das Schließen des Seitenschneiders bewirkt. Zum anderen wird die auf den Griffhebel 20 aufgebrachte Kraft über das Griffhebelgelenk 21 und das damit gekoppelte Messerschlittenvorschubelement 42 auf das Messerschlittengelenk 41 übertragen und hierdurch die Verschiebung des beweglich gelagerten Messerschlittens 40 innerhalb der Hebeleinheit 30 nach hinten eingeleitet. Bei der Verschiebung gleiten die Rollen am Messerschlittengelenk 41 über ihre Bahn in der Hebeleinheit 30 und in die Führungskulisse 43 bewegt sich relativ zu dem Führungsstift 36.

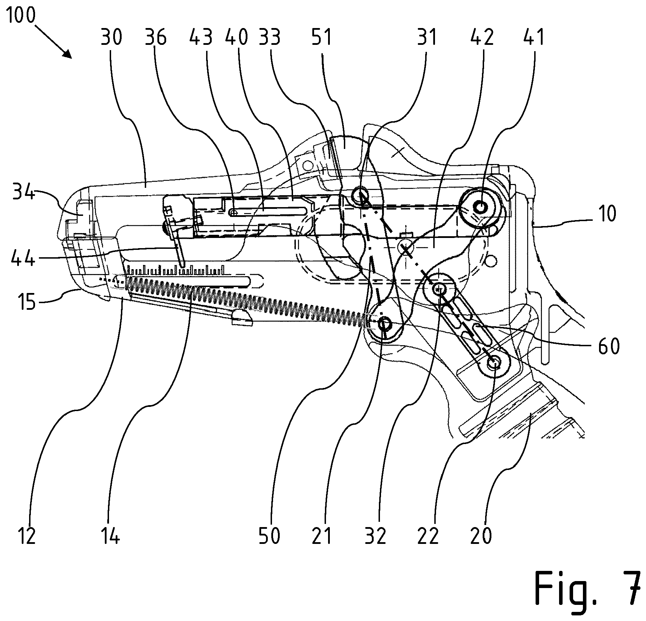

Dadurch wird die in Figur 7 gezeigte rückwärtige Endposition erreicht, wobei das abgeschnittene Ende der Kabelisolierung von dem Leiter oder der Litze abgezogen wird. In der Endposition ist der Griffhebel 20 maximal an den feststehenden Griffbereich 11 am Basiselement 10 herangeführt. Das Messerelement 44 erreicht ebenfalls seine rückwärtige Endposition innerhalb der Hebeleinheit 30. Der hintere Zwischenhebel 60 befindet sich nun in gestreckter Lage in Bezug auf die Verbindungslinie der Hebelgelenke 31, 32.

Wird der Griffhebel 20 losgelassen, werden alle beweglichen Elemente über die Wirkung der zuvor gespannten Zugfeder 14 aus der Endposition gemäß Figur 7 wieder in die in Figur 5A gezeigte Ausgangslage zurückgeführt:
- Das vordere Griffhebelgelenk 21 bewegt sich auf einer kreisbogenförmigen Bahn um das obere Hebelgelenk 31.
- Das vordere Griffhebelgelenk 21 wirkt über das Messerschlittenvorschubelement 42 und das Messerschlittengelenk 41 auf den Messerschlitten 40 und zieht diesen nach vorn. Der Messerschlitten 40 bewegt sich linear nach vorn.
- Mit dem Verschwenken des Griffhebels 20 nach vorn wandert auch das hintere Griffhebelgelenk 22 wieder vor und zieht den unteren Zwischenhebel 50 mit sich.

Indirekt wird dadurch auch der Zwischenhebel 60 zurückgeführt.

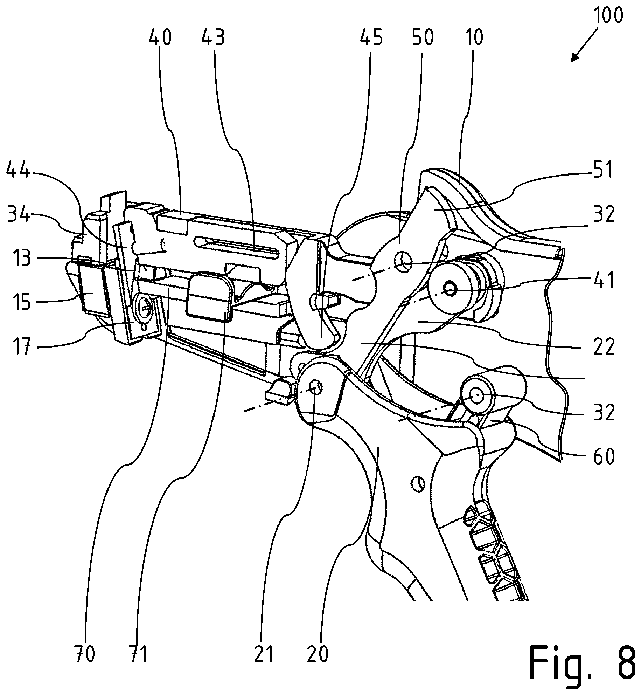

Figur 8 zeigt noch einmal den vorderen Bereich der geschnittenen Abisolierzange 100, wobei die obere Hebeleinheit 30 bis auf die Klemmbacke 34 ausgeblendet ist. Zwischen den Messerelementen 17, 44 ist die Einführöffnung 13 erkennbar, die auch beim Schließen der beiden Zangenbacken erhalten bleibt, so dass die elektrischen Leiter im Inneren des Kabels beim Abisolieren nicht durchtrennt werden. Das Kabel kann bis an einen einstellbaren Endanschlag 71 an dem Auflageelement 70 geschoben werden, so dass über die Position des Endanschlags 71 die gewünschte Länge der Abisolierung vorgegeben werden kann.

### Bezugszeichen:

- 2: Kabel

- 100: Abisolierzange
- 10: Basiselement
- 11: Griffbereich
- 12: Gegenhalterbereich
- 13: Einführöffnung
- 14: Zugfeder
- 15: untere Klemmbacke
- 16: Sperrelement
- 17: Messerelement
- 18: Stift

- 20: Griffhebel
- 21: vorderes Griffhebelgelenk
- 22: hinteres Griffhebelgelenk

- 30: Hebeleinheit
- 31: oberes Hebelgelenk
- 32: unteres Hebelgelenk
- 33: Seitenschneidermesserelement
- 34: obere Klemmbacke
- 36: Führungsstift

- 40: Messerschlitten
- 41: Messerschlittengelenk
- 42: Messerschlittenvorschubelement
- 43: Führungskulisse
- 44: Messerelement
- 45: Klaue

- 50: vorderes Zwischenhebelelement
- 51: Seitenschneiderambosselement

- 60: hinteres Zwischenhebelelement

- 70: Auflageelement

## Patentansprüche

1. Automatische Abisolierzange (100) mit wenigstens:
- einem Basiselement (10) mit einem Griffbereich (11) und einem Gegenhalterbereich (12);
- einer gegenüber dem Basiselement (10) um ein oberes Hebelgelenk (31) schwenkbaren Hebeleinheit (30), in der ein Messerschlitten (40) mit wenigstens einem Messerelement (44) verschiebbar angeordnet ist ;
- einem Griffhebel (20), der schwenkbar mit dem Basiselement (10) und der Hebeleinheit (30) verbunden ist, wobei
- der Griffhebel (20) über ein vorderes Griffhebelgelenk (21), ein hinteres Griffhebelgelenk (22), ein vorderes Zwischenhebelelement (50), ein hinteres Zwischenhebelelement (60), das obere Hebelgelenk (31) und ein unteres Hebelgelenk (32) schwenkbar mit der Hebeleinheit (30) verbunden ist,
- der Messerschlitten (40) über ein Messerschlittengelenk (41) mit einem Ende eines Messerschlittenvorschubelements (42) gekoppelt ist, das mit dem anderen Ende gelenkig an dem Griffhebel (20) angebunden ist;
- die Hebeleinheit (30), das Basiselement (10) und das vordere Zwischenhebelelement (50) an dem oberen Hebelgelenk (31) miteinander gekoppelt sind; und sich das vordere Zwischenhebelelement (50) zwischen dem oberen Hebelgelenk (31) und dem vorderen Griffhebelgelenk (21) erstreckt;
- das vordere Zwischenhebelelement (50) und der Griffhebel (20) an dem vorderen Griffhebelgelenk (21) gelenkig miteinander verbunden sind und
- der Griffhebel (20) an dem hinteren Griffhebelgelenk (22) mit dem hinteren Zwischenhebelelement (60) gelenkig verbunden ist, welches über das untere Hebelgelenk (32) mit der Hebeleinheit (30) verbunden ist;
- das andere Ende des Messerschlittenvorschubelements (42) mit dem vorderen Griffhebelgelenk (21) am Griffhebel (20) angebunden ist, wobei das Messerschlittenvorschubelement (42) in einem spitzen Winkel zur Verschieberichtung des Messerschlittens (40) angestellt ist.

2. Abisolierzange (100) nach Anspruch 1, **dadurch gekennzeichnet, dass** das vordere Zwischenhebelelement (50) länger ist als das hintere Zwischenhebelelement (60).

3. Abisolierzange (100) nach Anspruch 1 oder 2, **dadurch gekennzeichnet, dass** der Gegenhalterbereich (12) eine Klemmbacke (15) aufweist und die Hebeleinheit (30) eine Klemmbacke (34) aufweist, wobei die Klemmbacken (15, 34) in einer Schließstellung der Abisolierzange (100) aneinander liegen.

4. Abisolierzange (100) nach Anspruch 3, **dadurch gekennzeichnet, dass** in der Schließstellung:
- sich der Messerschlitten (40) in einer vorderen Position relativ zu der Hebeleinheit (30) befindet,
- eine Verbindungslinie der beiden Griffhebelgelenke (21, 22) einen Winkel mit einer Verbindungslinie des vorderen Griffhebelgelenks (21) und des oberen Hebelgelenks (31) von 80° bis 100° einschließt und
- die Zwischenhebelelemente (50, 60) in etwa parallel zueinander ausgerichtet sind.

5. Abisolierzange (100) nach einem der vorhergehenden Ansprüche, **dadurch gekennzeichnet, dass** an einer Oberseite ein Seitenschneider ausgebildet ist, wobei ein Teil des Seitenschneiders fest an der Hebeleinheit (30) angeordnet ist und ein anderer, beweglicher Teil, durch eine Verlängerung des vorderen Zwischenhebelelements (50) über das obere Hebelgelenk (31) hinaus gebildet ist.

6. Abisolierzange (100) nach Anspruch 5, **dadurch gekennzeichnet, dass** ein oberer Teil des vorderen Zwischenhebelelements (50) als Seitenschneiderambosselement (51) ausgebildet ist, der gegen ein Seitenschneidermesserelement (33) an der Hebeleinheit (30) wirkt.

## Claims

1. Automatic insulation-stripping pliers (100) having at least:
- a base element (10) which has a grip region (11) and has a counterholder region (12);
- a lever unit (30) which is pivotable about an upper lever joint (31) in relation to the base element (10) and in which a knife carriage (40) with at least one knife element (44) is arranged in a displaceable manner;
- a grip lever (20) which is connected in a pivotable manner to the base element (10) and the lever unit (30), wherein
- the grip lever (20) is connected in a pivotable manner via a front grip-lever joint (21), a rear grip-lever joint (22), a front intermediate lever element (50), a rear intermediate lever element (60), the upper lever joint (31) and a lower lever joint (32) to the lever unit (30),
- the knife carriage (40) is coupled via a knife-carriage joint (41) to one end of a knife-carriage advancement element (42) which, at the other end, is attached in an articulated manner to the grip lever (20);
- the lever unit (30), the base element (10) and the front intermediate lever element (50) are coupled to one another at the upper lever joint (31); and the front intermediate lever element (50) extends between the upper lever joint (31) and the front grip-lever joint (21);
- the front intermediate lever element (50) and the grip lever (20) are connected to one another in an articulated manner at the front grip-lever joint (21), and
- the grip lever (20) is connected in an articulated manner at the rear grip-lever joint (22) to the rear intermediate lever element (60), which is connected via the lower lever joint (32) to the lever unit (30);
- the other end of the knife-carriage advancement element (42) is attached to the grip lever (20) at the front grip-lever joint (21),
wherein the knife-carriage advancement element (42) is positioned at an acute angle to the displacement direction of the knife carriage (40).

2. Insulation-stripping pliers (100) according to Claim 1, **characterized in that** the front intermediate lever element (50) is longer than the rear intermediate lever element (60).

3. Insulation-stripping pliers (100) according to Claim 1 or 2, **characterized in that** the counterholder region (12) has a clamping jaw (15) and the lever unit (30) has a clamping jaw (34), wherein the clamping jaws (15, 34) abut against one another in a closed position of the insulation-stripping pliers (100).

4. Insulation-stripping pliers (100) according to Claim 3, **characterized in that**, in the closed position:
- the knife carriage (40) is in a front position relative to the lever unit (30),
- a line connecting the two grip-lever joints (21, 22) includes an angle of 80° to 100° with a line connecting the front grip-lever joint (21) and the upper lever joint (31), and
- the intermediate lever elements (50, 60) are oriented approximately parallel to each other.

5. Insulation-stripping pliers (100) according to one of the preceding claims, **characterized in that** a side cutter is formed on a top side, wherein one part of the side cutter is arranged in a fixed manner on the lever unit (30) and another, movable, part is formed by an extension of the front intermediate lever element (50) beyond the upper lever joint (31).

6. Insulation-stripping pliers (100) according to Claim 5, **characterized in that** an upper part of the front intermediate lever element (50) is in the form of a side-cutter anvil element (51) which acts against a side-cutter knife element (33) on the lever unit (30).

## Revendications

1. Pince à dénuder automatique (100) avec au moins :
- un élément de base (10) avec une zone de poignée (11) et une zone de contre-appui (12) ;
- une unité de levier (30) pivotante par rapport à l'élément de base (10) autour d'une articulation de levier supérieure (31), dans laquelle un chariot porte-lame (40) comportant au moins un élément de lame (44) est disposé de manière déplaçable ;
- un levier de poignée (20) relié de manière pivotante à l'élément de base (10) et à l'unité de levier (30), où
- le levier de poignée (20) est relié de manière pivotante à l'unité de levier (30) via une articulation avant de levier de poignée (21), une articulation arrière de levier de poignée (22), un élément de levier intermédiaire avant (50), un élément de levier intermédiaire arrière (60), l'articulation de levier supérieure (31) et une articulation de levier inférieure (32),
- le chariot porte-lame (40) est couplé, via une articulation de chariot porte-lame (41), à une extrémité d'un élément d'avance de chariot porte-lame (42), lequel est relié de manière articulée par son autre extrémité au levier de poignée (20) ;
- l'unité de levier (30), l'élément de base (10) et l'élément de levier intermédiaire avant (50) sont couplés entre eux au niveau de l'articulation de levier supérieure (31) ; et l'élément de levier intermédiaire avant (50) s'étend entre l'articulation de levier supérieure (31) et l'articulation avant de levier de poignée (21) ;
- l'élément de levier intermédiaire avant (50) et le levier de poignée (20) sont reliés de manière articulée l'un à l'autre au niveau de l'articulation avant de levier de poignée (21), et
- le levier de poignée (20) est relié de manière articulée, au niveau de l'articulation arrière de levier de poignée (22), à l'élément de levier intermédiaire arrière (60), lequel est relié à l'unité de levier (30) via l'articulation de levier inférieure (32) ;
- l'autre extrémité de l'élément d'avance de chariot porte-lame (42) est reliée au levier de poignée (20) avec l'articulation avant de levier de poignée (21),
où l'élément d'avance de chariot porte-lame (42) est disposé selon un angle aigu par rapport à la direction de déplacement du chariot porte-lame (40).

2. Pince à dénuder (100) selon la revendication 1, **caractérisée en ce que** l'élément de levier intermédiaire avant (50) est plus long que l'élément de levier intermédiaire arrière (60).

3. Pince à dénuder (100) selon la revendication 1 ou 2, **caractérisée en ce que** la zone de contre-appui (12) comporte une mâchoire de serrage (15) et l'unité de levier (30) comporte une mâchoire de serrage (34), les mâchoires de serrage (15, 34) étant en appui l'une contre l'autre dans une position de fermeture de la pince à dénuder (100).

4. Pince à dénuder (100) selon la revendication 3, **caractérisée en ce que**, dans la position de fermeture :
- le chariot porte-lame (40) se trouve dans une position avant par rapport à l'unité de levier (30),
- une ligne de liaison des deux articulations de levier de poignée (21, 22) forme un angle de 80° à 100° avec une ligne de liaison de l'articulation avant de levier de poignée (21) et de l'articulation de levier supérieure (31), et
- les éléments de levier intermédiaires (50, 60) sont orientés essentiellement parallèlement l'un par rapport à l'autre.

5. Pince à dénuder (100) selon l'une quelconque des revendications précédentes, **caractérisée en ce qu'**un dispositif de coupe latéral est formé sur un côté supérieur, une partie du dispositif de coupe latéral étant disposée de manière fixe sur l'unité de levier (30) et une autre partie, mobile, étant formée par un prolongement de l'élément de levier intermédiaire avant (50) au-delà de l'articulation de levier supérieure (31).

6. Pince à dénuder (100) selon la revendication 5, **caractérisée en ce qu'**une partie supérieure de l'élément de levier intermédiaire avant (50) est réalisée en tant qu'élément d'enclume de dispositif de coupe latéral (51), qui agit contre un élément de lame de dispositif de coupe latéral (33) sur l'unité de levier (30).
